# EUROPEAN PATENT APPLICATION

(11) **EP 4 664 144 A1**
(43) Date of publication of application: **17.12.2025**
(21) Application number: 24181381.5
(22) Date of filing: 11.06.2024
(51) Int. Cl.: G01S 7/40, G01S 7/41, G01S 7/292

(54) **ADAPTIVE THRESHOLDING TECHNIQUE FOR SINGLE SCATTERER TESTS**

(71) Applicant: Aptiv Technologies AG, 8200 Schaffhausen (CH)
(72) Inventor: STATNIKOV, Konstantin, 8200 Schaffhausen (CH)
(74) Representative: Bardehle Pagenberg Partnerschaft mbB Patentanwälte Rechtsanwälte

(57) **Abstract**

A computer-implemented method for determining an adaptive threshold for classifying a response signal to a signal emitted by a radar unit as a single scatterer response or a non-single scatterer response, the method comprising: obtaining a plurality of unit-independent thresholds based on a plurality of response signals with different signal-to-noise ratios; obtaining a plurality of unit-dependent thresholds based on a plurality of signals emitted by the radar unit with a plurality of configurations of azimuth and elevation angles; determining, based on the plurality of unit-independent thresholds and the plurality of unit-dependent thresholds, the adaptive threshold. The present invention further relates to a computer-implemented method for classifying a response signal to a signal emitted by a radar unit as a single scatterer response or a non-single scatterer response. The present invention also relates to a corresponding control unit, apparatus and computer program.

## Description

### Technical field

The present invention relates to a computer-implemented method for determining an adaptive threshold for classifying a response signal to a signal emitted by a radar unit as a single scatterer response or a non-single scatterer response. The present invention also refers to a computer-implemented method for classifying a response signal to a signal emitted by a radar unit as a single scatterer response or a non-single scatterer response. Corresponding computer programs, control unit and apparatus are also described.

### Technical background

Radio Detection and Ranging (Radar) units are advanced electronic devices used to detect and track objects by emitting radio waves and analyzing their reflections. Radar units play an important role in various fields such as aviation, maritime navigation, weather forecasting, and even military operations. This is, among others, because radar units provide critical information about the position, the speed, and generally speaking the characteristics of objects. By measuring the time delay between the transmission and reception of radio waves, radar units can accurately determine the distance and direction of targets. This makes radar units an indispensable tool for tasks such as monitoring and managing movement of aircrafts in the aviation field or detecting vessels, landmasses and navigational hazards in maritime navigation.

Single scatterer tests are used to characterize radar units through analyzing the response generated when a radar signal interacts with a single target also referred to as single scatterer. More specifically, a single scatterer test involves the selection of a suitable scatterer such as a calibrated object with known size, shape and radar cross-section. The radar unit then emits a radar signal which interacts with the previously determined scatterer that reflects the signal back towards the radar unit. The reflected signal is received by the radar unit and further evaluated. A crucial parameter for such further evaluation is the determination of a threshold that distinguishes between a single scatterer response and non-single scatterer response.

In conventional thresholding techniques for single scatterer tests, a fixed threshold is used. In other words, a specific (i.e., fixed) threshold is used to distinguish between a single scatterer response and a non-single scatterer response. Thus, conventional methods have the disadvantage of being imprecise. The fixed nature of the threshold means that it cannot adapt to varying signal conditions, leading to potential inaccuracies. This can result in either false positives, where non-single scatterer responses are incorrectly classified as single scatterer responses, or false negatives, where actual single scatterer responses are missed.

A further disadvantage of conventional thresholding techniques is their lack of flexibility since those methods do not account for changes in the environment or unexpected conditions. As the complexity of the environment or the signal increases, the conventional thresholding techniques may become less effective and struggle to maintain an accurate classification. This can be particularly problematic in real-world applications where signals are often subject to a variety of noise and interference (e.g., electromagnetic interference, environmental noise etc.) which further complicating the classification process. Accordingly, the inflexibility of conventional methods can lead to inefficiencies or even failure to accurately classifying a signal.

Conventional thresholding techniques may also suffer from problems regarding robustness since they may not be able to accurately classify unexpected events or anomalies. Robustness is pivotal in a variety of applications, as it ensures that the radar unit and the system of which it is part of is able to maintain performance even under adverse conditions. However, conventional thresholding techniques lack the adaptability required to handle such situations, making the classification prone to errors when faced with unforeseen signal variations. This lack of robustness can undermine the reliability of the system of which the radar unit is a part of, leading to potential misclassifications.

Against this background, an object of the present invention is to address one or more or all of the above-mentioned disadvantages.

### Summary of the invention

The above-mentioned objects and other objects, which become apparent from the following description, are solved by the subject-matter of the independent claims. Preferred embodiments are subject of the dependent claims.

A 1^{st} embodiment of the invention is directed to a computer-implemented method for determining an adaptive threshold for classifying a response signal to a signal emitted by a radar unit as a single scatterer response or a non-single scatterer response, the method comprising: obtaining a plurality of unit-independent thresholds based on a plurality of response signals with different signal-to-noise ratios; obtaining a plurality of unit-dependent thresholds based on a plurality of signals emitted by the radar unit with a plurality of configurations of azimuth and elevation angles; determining, based on the plurality of unit-independent thresholds and the plurality of unit-dependent thresholds, the adaptive threshold.

Obtaining a plurality of unit-independent thresholds based on a plurality of response signals with different signal-to-noise ratios may have the advantage of obtaining relevant thresholding information independent from each individual radar unit. Moreover, basing the plurality of unit-independent thresholds on a plurality of response signals with different signal-to-noise ratios may provide relevant information about the behavior of the unit when processing signals with different signal-to-noise ratios. This may be particularly advantageous since the radar unit may be used in situations where signal-to-noise ratios differ and should be able to properly function in the respective situation.

Obtaining a plurality of unit-dependent thresholds based on a plurality of signals emitted by the radar unit with a plurality of configurations of azimuth and elevation angles may have the advantage of obtaining thresholding information that accurately reflects the behavior of the radar unit. Basing the plurality of unit-dependent thresholds on signals emitted by the radar unit with a plurality of configurations of azimuth and elevation angles may enable to capture the radar unit's behavior when using different azimuth and elevation angles and thus improve the understanding of the radar units behavior in various circumstances.

Determining, based on the plurality of unit-independent thresholds and the plurality of unit-dependent thresholds, the adaptive threshold may have the advantage of incorporating unit-independent and unit-dependent threshold information into the determination of the adaptive threshold. Determining the adaptive threshold based on unit-independent information and unit-dependent information may improve the accuracy of the adaptive threshold.

According to a 2^{nd} embodiment, obtaining a plurality of unit-dependent thresholds comprises: performing, using the radar unit, a plurality of single scatterer tests; wherein each of the plurality of single scatterer test is performed with one of the plurality of configurations of azimuth and elevation angles.

Performing, using the radar unit, a plurality of single scatterer tests may provide accurate information for the subsequent determination of the adaptive threshold and may thus improve the determination of the adaptive threshold. Each of the plurality of single scatterer test being performed with one of the plurality of configurations of azimuth and elevation angles may provide information about the behavior of the radar unit in different situations (i.e., different configurations of azimuth and elevation). Incorporating information about the behavior of the radar unit for different configurations of azimuth and elevation into the determination of the adaptive threshold may improve the accuracy of the adaptive threshold.

According to a 3^{rd} embodiment the step of obtaining a plurality of unit-dependent thresholds further comprises: determining the plurality of unit-dependent thresholds based on the plurality of single scatterer tests.

Simulating one or more single scatterer tests may be the most suitable simulation for determining each of the plurality of unit-independent thresholds. The simulation of single scatterer tests may be less complex than that of similar tests. Thus, simulating single scatter may save computational resources and require less time, which is especially advantageous when a large number of simulations is required.

According to a 4^{th} embodiment, the step of obtaining a plurality of unit-independent thresholds comprises: obtaining a plurality of unit-independent chamber thresholds based on a first statistical simulation using a measured radar response; wherein the first statistical simulation is preferably a first Monte Carlo simulation.

Obtaining a plurality of unit-independent chamber thresholds based on a first statistical simulation may be an efficient manner of obtaining the plurality of unit-independent chamber thresholds in comparison to other techniques which may require intensive experimentation. Moreover, obtaining a plurality of unit-independent chamber thresholds based on a first statistical simulation may provide accurate results. Further, statistical simulation may provide a higher degree of flexibility and possible integration. Statistical simulation may also provide the advantage of adjusting control variables and may be more time efficient. Using a measured radar response may have the advantage of incorporating measured information into the analysis and not merely relying on ideal scenario information.

The first statistical simulation preferably being a second Monte Carlo simulation may have the advantage of being able to capture the underlying process and accurately determine each of the plurality of unit-independent thresholds. Using a Monte Carlo simulation may also have the advantage of being more scalable than comparable simulation techniques.

According to a 5^{th} embodiment, the step of obtaining a plurality of unit-independent thresholds comprises: obtaining a plurality of unit-independent ideal thresholds based on a second statistical simulation using an ideal radar response; wherein the second statistical simulation is preferably a first Monte Carlo simulation.

With regards to the second statistical simulation the same advantages as mentioned for the previous embodiment also apply for this embodiment. The same holds for using a Monte Carlo simulation as the second statistical simulations. In other words, the same advantages as mentioned above apply to this embodiment. Using an ideal radar response may represent the unit-independent (i.e., nominal behavior) of an ideally calibrated radar sensor and may serve as a benchmark across the entire sensor series. The generation of this data is time-consuming, and it may not be a feasible solution to generate this data for each individual radar unit.

According to a 6^{th} embodiment, the step of determining comprises: calculating, based on the plurality of unit-independent chamber thresholds and the plurality of unit-independent ideal thresholds, a plurality of unit-independent correction thresholds.

Calculating, based on the plurality of unit-independent chamber thresholds and the plurality of unit-independent ideal thresholds, a plurality of unit-independent correction thresholds may have the advantage of incorporating unit-independent chamber threshold information into the ideal threshold information. This may provide a more accurate view on the unit-independent information than merely considering either ideal thresholding information or chamber thresholding information. Thus, this feature may allow for a more holistic view on unit-independent thresholding information.

According to a 7^{th} embodiment, the step of calculating comprises extrapolating one or more of the unit-independent correction thresholds of the plurality of unit-independent correction values.

Extrapolating may have the advantage of efficiently determining one or more unit-independent correction thresholds. Moreover, using extrapolation as a determination technique may use less resources than comparable determination techniques. Further, extrapolation may be less complex during implementation and may improve interpretability of the results.

According to an 8^{th} embodiment, the step of calculating further comprises: interpolating one or more of the unit-independent correction thresholds of the plurality of unit-independent correction values.

The same advantages as mentioned with regards to the previous embodiment may also apply to embodiment 8. The mere difference is that that one or more unit-independent correction thresholds were not extrapolated but rather interpolated.

According to a 9^{th} embodiment, the step of determining further comprises: shifting the plurality of unit-independent correction thresholds to obtain a plurality of unit-independent shifted correction thresholds based on the plurality of unit-dependent thresholds.

Shifting the plurality of unit-independent correction thresholds to obtain a plurality of unit-independent shifted correction thresholds based on the plurality of unit-dependent thresholds may be advantageous since it incorporates unit-dependent information into the determination process. It may further be a required technical step for the low-complexity determination of a more accurate adaptive threshold.

According to a 10^{th} embodiment, the step of determining further comprises: adding the plurality of unit-independent correction thresholds, the plurality of unit-independent shifted correction thresholds and the plurality of ideal thresholds to obtain a plurality of final thresholds.

Adding the plurality of unit-independent correction thresholds, the plurality of unit-independent shifted correction thresholds and the plurality of ideal thresholds to obtain a plurality of final thresholds may have the advantage of incorporating unit-independent information and unit-dependent information into the plurality of final thresholds. The incorporation of such relevant information may improve the accuracy of the plurality of final thresholds and thus improve the classification results when the final thresholds are used for classifying signals as single-scatterer or non-single scatterer. Moreover, adding the plurality of thresholds may provide the advantage of being computationally efficient. Adding the plurality of thresholds may also increase interpretability of the determination process.

According to an 11^{th} embodiment, the step of determining further comprises: obtaining a signal-to-noise ratio; extracting the adaptive threshold, based on the plurality of final thresholds and the signal-to-noise ratio.

Basing the extraction of the adaptive threshold on the plurality of final thresholds may have the advantage of incorporating unit-independent information and unit-dependent information into the extraction process. The incorporation of both types of information may improve the accuracy of the extracted adaptive threshold. In other words, the adaptive threshold may be able to more accurately classify signals as single-scatterer events or non-single scatterer events.

Further basing the extraction of the adaptive threshold on the obtained signal-to-noise ratio may also improve the extraction process and later on the classification process in which the extracted adaptive threshold is used. This may be since the extraction of the threshold incorporates information about the quality of the signal (i.e., signal-to-noise ratio).

A 12^{th} embodiment of the invention is directed to a computer-implemented method for classifying a response signal to a signal emitted by a radar unit as a single scatterer response or a non-single scatterer response, the method comprising: determining an adaptive threshold according to any one of the preceding embodiments; classifying, based on the adaptive threshold, the response signal to the signal emitted by the radar unit as a single scatterer response or a non-single scatterer response.

Determining an adaptive threshold according to any one of the preceding embodiments may have all of the advantages mentioned with regards to the preceding embodiments. Classifying, based on the adaptive threshold, the response signal to the signal emitted by the radar unit as a single scatterer response or a non-single scatterer response may have the advantage of improving the classification. Accordingly, a distinction between a single scatterer response and a non-single scatterer response may be more accurate. A more accurate distinction between different scatterer responses may improve the underlying tasks for which the radar unit is used for. The improved classification may be due to the improved adaptive threshold.

A 13^{th} embodiment of the invention is directed to a control unit for determining an adaptive threshold for classifying a response signal to a signal emitted by a radar unit as a single scatterer response or a non-single scatterer response, the control unit comprising means for performing the method of any one of embodiments 1 to 11 or the method of embodiment 12.

A 14^{th} embodiment of the invention is directed to an apparatus for determining an adaptive threshold for classifying a response signal to a signal emitted by a radar unit as a single scatterer response or a non-single scatterer response, the apparatus comprising the control unit of the preceding embodiment.

A 15^{th} embodiment of the invention is directed to a computer program comprising instructions which, when executed by a computer, cause the computer to carry out the method of any one of embodiments 1 to 11 or the method of embodiment 12.

### Brief description of the figures

Various aspects of the present invention are described in more detail in the following by reference to the accompanying figures without the present invention being limited to the embodiments of these figures.
- Fig. 1: illustrates a flow chart schematically showing the adaptive threshold determination process according to an embodiment of the present invention;
- Fig. 2: illustrates the required unit-dependent and unit-independent information required for the adaptive threshold determination process according to an embodiment of the present invention;
- Fig. 3: illustrates the calculation of the correction thresholding curve including the extrapolation technique according to an embodiment of the present invention;
- Fig. 4: illustrates the extraction of the intercept point according to an embodiment of the present invention;
- Fig. 5: illustrates the shifting of the correction thresholding curve according to an embodiment of the present invention;
- Fig. 6: illustrates the calculation of the final thresholding curve that is used to extract the adaptive threshold according to an embodiment of the present invention.

### Detailed description of preferred embodiments

In the following, the invention is described with reference to the accompanying figures in more detail. However, the present invention can also be used in other embodiments not explicitly disclosed hereafter. As detailed below, the embodiments are compatible with each other, and individual features of one embodiment may also be applied to another embodiment.

Throughout the figures and description, the same reference numerals refer to the same elements, unless stated otherwise. The figures may not be drawn to scale, and the relative size, proportions, and depiction of elements in the figures may be exaggerated for the purpose of clarity, illustration, and convenience. The figures do not limit the scope of the claims but merely support the understanding of the invention.

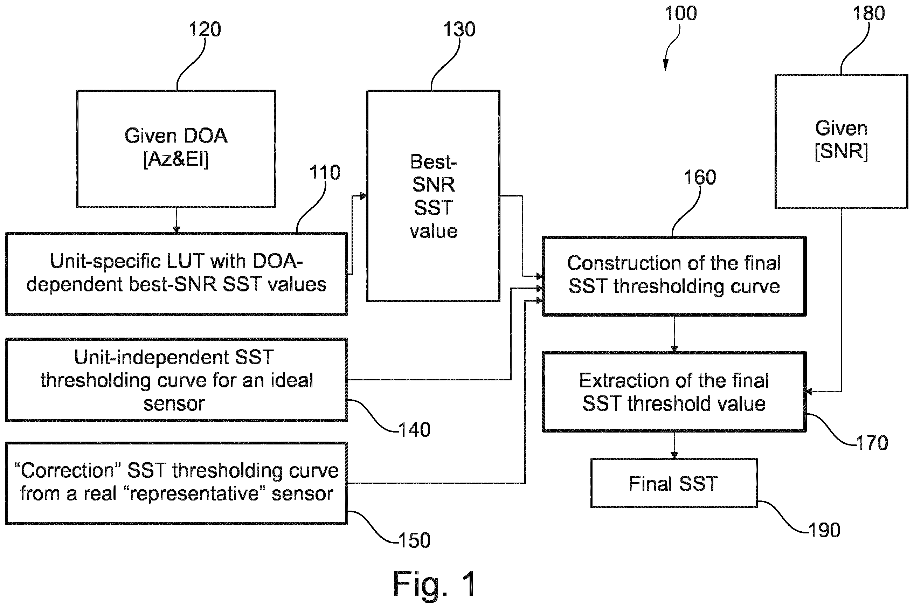

**Figure 1** shows a flow diagram 100 illustrating the process of determining an adaptive threshold for classifying a response signal as a single scatterer response or a non-single scatterer response. As shown in Figure 1, the process combines information that is independent from the specific radar unit 140, 150 and information that is dependent on the specific radar unit 110, 120, 130. Combining unit-dependent and unit-independent information to derive the adaptive threshold my improve the accuracy of the derived threshold.

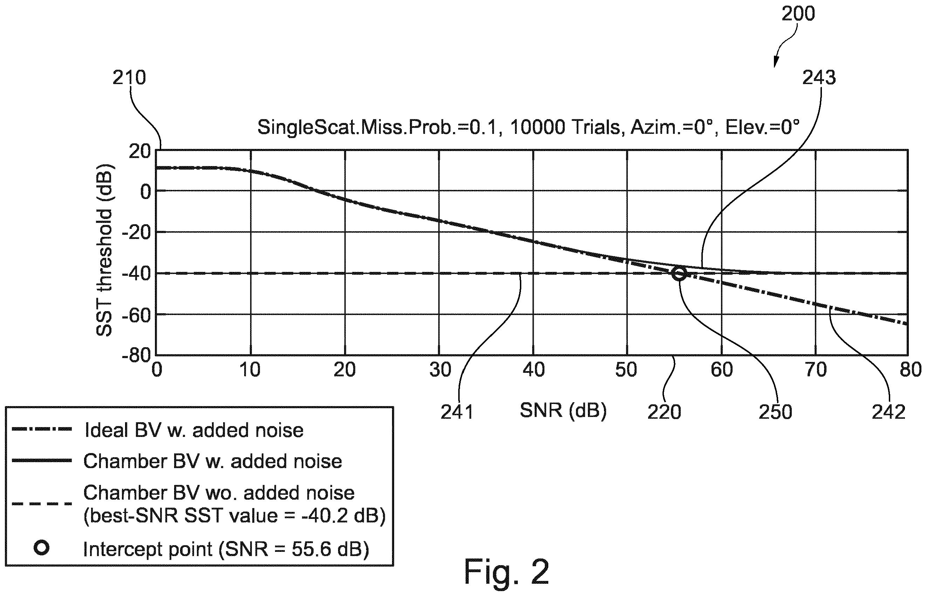

The unit-dependent information is based on measured chamber data 110. More specifically, given a configuration of azimuth and elevation angles 120, the behavior of a specific radar unit is measured. For those measurements, a high signal-to-noise ratio may be used. Those measurements are performed once for each radar unit to capture the behavior of that specific radar unit. The obtained information is then used to calculate the unit-dependent threshold value 130. This value is represented as the dotted line 241 in the graph 200 of Figure 2. No statistical simulation, such as a Monte Carlo simulation is required to obtain the unit-dependent information. In summary, the unit-dependent information is supposed to capture the behavior of a specific radar unit.

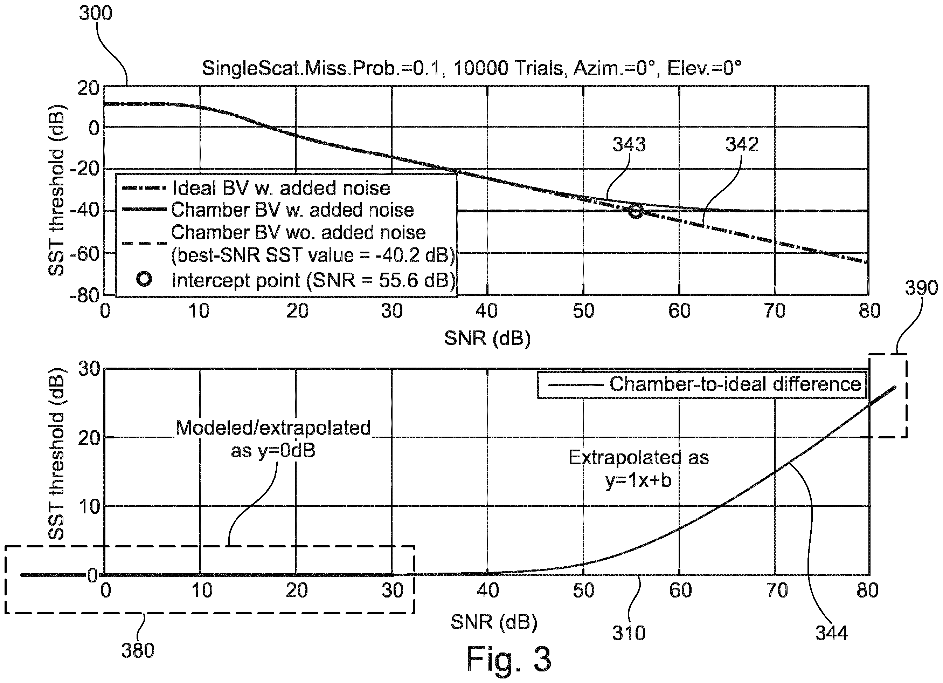

The unit-independent information comprises two elements 140, 150. The first element 140 is an ideal thresholding curve (i.e., a curve representing a single scatter test threshold value for a signal-to-noise ratio value) based on a statistical simulation such as a Monte Carlo simulation. The statistical simulation is performed based on a previously specified configuration on azimuth and elevation angles. The ideal thresholding curve is shown and explained in more detail with regards to Figure 2. The second element 150 is a correction thresholding curve which is also based on a statistical simulation such as a Monte Carlo simulation. The correction thresholding curve is also based on a statistical simulation with a single measured radar response from a representative radar unit at the same specified configuration of azimuth and elevation angles. The correction thresholding curve is shown and explained in more detail with regards to Figure 3. In contrast to the unit-dependent information, the unit-independent information is supposed to capture the general behavior of a radar unit of a specific type.

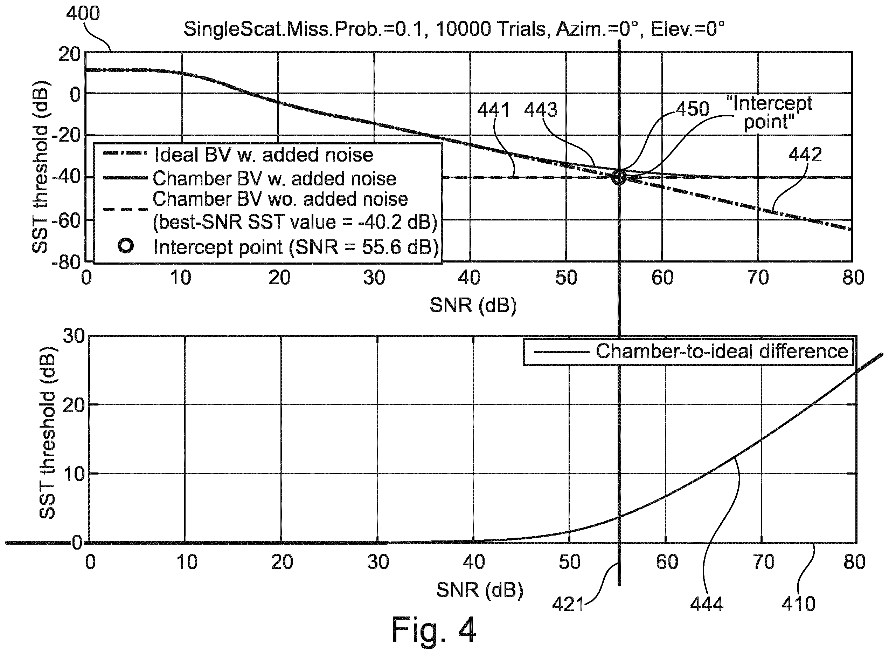

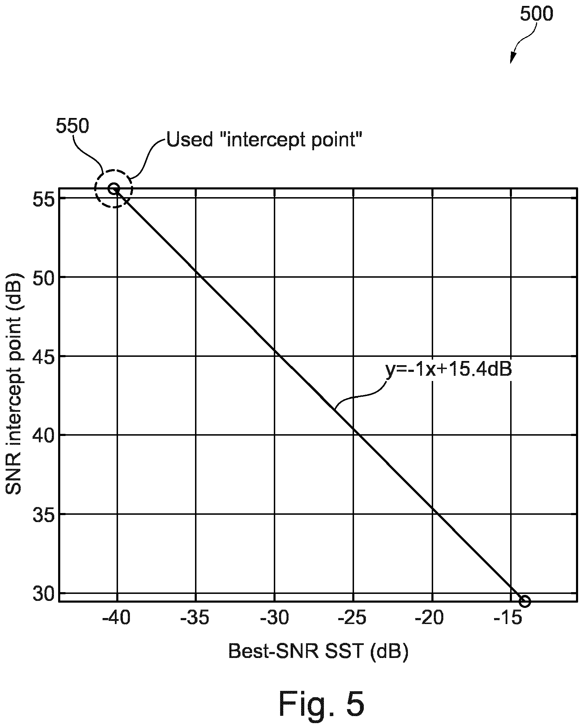

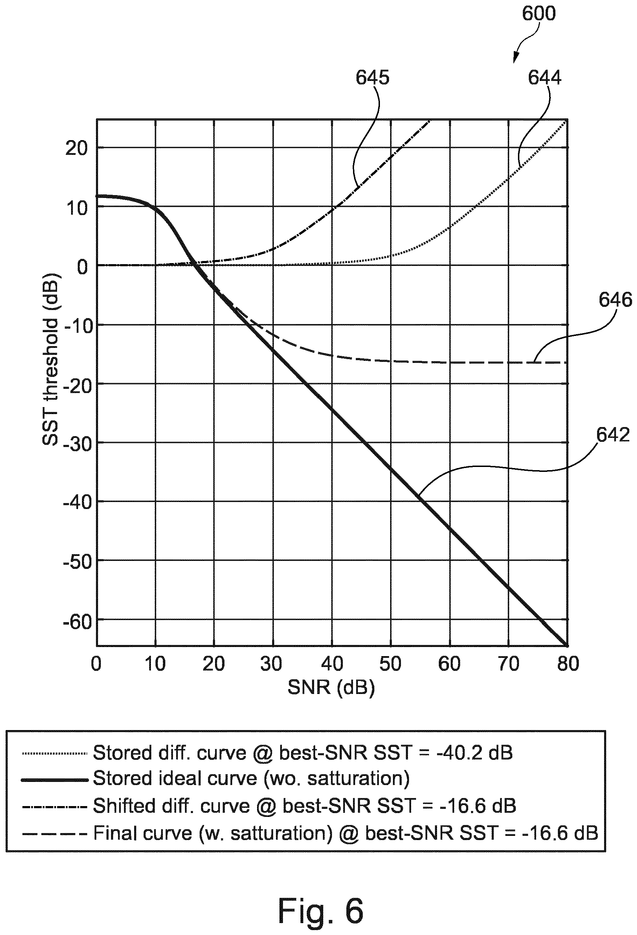

Once the unit-dependent information, the unit-independent ideal thresholding curve and the unit-independent correction thresholding curve have been derived, a final single scatter test thresholding curve is created 160. This requires the extraction of the SNR intercept point between the semi-dotted line representing the ideal thresholding curve and the and the dotted line representing the unit-dependent data as shown in Figure 4. The correction thresholding curve is then shifted using the SNR intercept point as a reference point as described in more detail with regards to Figure 5 to obtain a shifted threshold curve. The final threshold curve is then derived based on the correction thresholding curve 644, the ideal thresholding curve 642 and the shifted correction thresholding curve 645 as described in more detail with regards to Figure 6.

The final step 170 in the adaptive threshold determination process is concerned with extracting the adaptive thresholding value from the constructed information. The extraction is straight forward and involves the provision of a signal-to-noise ratio 180. Next, the adaptive thresholding value 190 is extracted by taking the single scatterer test threshold value of the final thresholding curve 646 that is associated with the respective signal-to-noise ratio 180.

**Figure 2** shows a graph 200 that visualizes unit-independent information received from a statistical simulation of a plurality of single scatterer tests (SST). The statistical simulation may be performed using a Monte Carlo simulation. Using a statistical simulation may be an efficient solution for providing accurate results without extensive experimentation. The heading of the graph 200 shows the configuration of the statistical parameters. For example, the azimuth angle and the elevation angle were both set to 0°, the single scatterer missed probability was set to 10% and a total of 10 000 trials per signal-to-noise ratio were simulated to achieve the results. Since one might easily simulate 15 000 or 20 000 trials instead of 10 000 trials, scalability may be a further advantage of using a statistical simulation.

With regards to the results shown in the graph 200 of Figure 2, the y-axis 210 indicates the single scatterer test threshold in decibel (dB) ranging from -80 dB to 20 dB and the x-axis 220 indicates the signal-to-noise ratio (SNR) in decibel which ranges from 0 dB to 80 dB. The graph 200 further shows three different lines 241, 242, 243 - a dotted line 241 that represents the unit-dependent threshold value (i.e., - 40.2 dB), a semi-dotted line 242 that represents the ideal thresholding curve and a solid line 243 that represents the chamber thresholding curve. Accordingly, the dotted line 241 shows the result of processing the unit-dependent data. As discussed in Figure 1, the unit-dependent information is collected by measuring the behavior of each individual radar unit. The measured data is then further processed to extract a unit-dependent threshold value shown in box 130 of Figure 1. The semi-dotted line 242 shows the result of the first element of the unit-independent data 140 as described in Figure 1.

The graph 200 also shows an SNR intercept point 250 which occurs at a signal-to-noise ratio of 55.6 dB in the example. The derivation of the SNR intercept point is discussed in more detail with regards to Figure 4.

**Figure 3** visualizes the extraction of the correction thresholding curve using a first graph 300 which is equal to the graph 200 described in Figure 2 and a second graph 310 which illustrates the correction thresholding curve 344, referred to here as the chamber-to-ideal difference curve. Similar to the first graph 300, the y-axis of the second graph 310 also indicates the single scatter test threshold in decibel and the x-axis indicates the signal-to-noise ratio in decibel.

The correction thresholding curve 344 (i.e., solid line in second graph 310) is calculated by taking the difference between the ideal thresholding curve 342 (i.e., semi-dotted line in first graph 300) and the chamber thresholding curve 343 (i.e., solid line in first graph 300). The second graph 310 shows that this curve 344 is flat from a signal-to-noise ratio of 0 dB to around 35 dB, it starts to ascend slowly between around 35 dB and 55 dB after which the correction thresholding curve 344 rises in a linear manner. Note that the y-axis of the first graph 300 and the second graph 310 have a slightly different scale. Accordingly, the difference between the ideal thresholding curve 342 and the chamber thresholding curve 343 appears larger in the second graph 310. Incorporating ideal thresholding values as well as measured thresholding values into the correction thresholding curve may have the advantage of improving the accuracy of the determined adaptive threshold.

Figure 3 also aims at showing the extrapolation feature. More specifically, two dotted boxes 380, 390 which represent extrapolations of the correction thresholding curve are shown in the second graph 310 of Figure 3. The left box 380 provides a first example of an extrapolation. In this case, all values below a signal-to-noise ratio of 30 decibels are extrapolated at a constant value of 0 decibel as the single scatter test threshold as indicated on the y-axis. This extrapolation may also be referred to as modelling. Extrapolation may replace the need for experimental data for all signal-to-noise ratio values which makes the overall process of determining the adaptive threshold more efficient. The right box 390 provides a second example of an extrapolation. In this case all values above a signal-to-noise ratio above 80 decibels were extrapolated as a line with a slope of + 1.

Although not specifically shown in Figure 3, missing values may also be derived using interpolation. Interpolation bears similar advantages as extrapolation.

**Figure 4** illustrates the determination of the SNR intercept point 450. Figure 4 shows a first graph 400 and a second graph 410 which are identical to the first graph 300 and the second graph 310 of Figure 3. This means both graphs indicate the single scatter test threshold in decibel on the y-axis and the signal-to-noise ratio in decibel on the x-axis.

The SNR intercept point 450 which is circled and indicated with a vertical line 421, is the point where the semi-dotted line 442 that represents the ideal thresholding curve and the dotted line 441 that represents the threshold derived from the unit-dependent threshold information intersect. In the example, the SNR intercept point has a signal-to-noise ratio of 55.6 decibels and a single scatter test threshold value of -40.2 decibels as shown in the first graph 400. It is to note that the SNR intercept point 450 is located on the ideal thresholding curve 442, on the unit-dependent threshold information 441, below the chamber thresholding curve 443 and below the correction thresholding curve 444.

**Figure 5** shows a shifting graph 500 that illustrates the shifting of the correction thresholding curve 544. The aim is to shift the correction thresholding curve 544 in such a manner that it accommodates for a unit-dependent threshold value 130 (i.e., given best SNR-SST value). To achieve this, the correction thresholding curve 544 is shifted horizontally. The reference point for that shift is the SNR intercept point 450 that is associated with the correction thresholding curve 344.

While previous graphs showed the single scatter test threshold on the y-axis and the signal-to-noise ratio on the x-axis, the shifting graph 500 shows the SNR intercept point in decibel on the y-axis and the best signal-to-noise ratio single scatter test in decibel on the x-axis. The SNR intercept point 550 is emphasized on the upper left-hand corner, the y-axis indicates that the value is 55.6 decibel as discussed with respect to the previous figures. This shifting graph 500, which is a simple line law, is needed to calculate the SNR intercept point 550 in decibels for any given best-SNR SST value in decibels. The line with a slope of -1 (on the dB/dB scale) goes through the mentioned above single known point on the upper left-hand corner with coordinates x = -40.2 decibel (representing the best-SNR SST value) and y =55.6dB (representing the SNR intercept point 550). Thus, for a given best-SNR SST value x1, the line equation y1(x1) = (-1) * x1+ 15.4dB is used to calculate the corresponding SNR intercept point 550 y1 in decibels. This line equation is also used in the example given below. The required horizontal shift is then calculated by taking the difference between the intercept point 450 and the SNR intercept point 550.

**Figure 6** show a final thresholding graph 600 that illustrates the calculation of the final thresholding curve 646. Similar to previous graphs, the y-axis indicates the single scatter test thresholding values in decibel ranging from -70 dB to 30 dB and the x-axis indicates the signal-to-noise ratio in decibel in a range from 0 dB to 89 dB.

The final thresholding graph 600 shows four curves, namely the correction thresholding curve 644, the ideal thresholding curve 642, the shifted correction thresholding curve 645 and the final thresholding curve 656. The correction thresholding curve 644 and the shifted correction thresholding curve 645 have a similar trajectory that starts at 0 decibel and shows an almost linear increase afterwards. It is also noticeable that the correction thresholding curve 645 has been shifted horizontally towards the origin of the thresholding graph 600 to create the shifted correction thresholding curve 645. The ideal thresholding curve 642 starts at around 11 decibels and starts declining in a linear manner at about 12 decibels.

The final thresholding curve 656 may be calculated in a two-step process. First, the correction thresholding curve 644 is shifted to obtain the shifted correction thresholding curve 645 as described with regards to the previous figure. Second, add the shifted correction curve 645 to the ideal thresholding curve 642. Note that the shifted correction curve 645 may also contain extrapolated and/or interpolated values. Accordingly, the trajectory of the final thresholding curve 646 follows that of the ideal thresholding curve 642 for the first 20 decibels. This is because both, the correction thresholding curve 644 and the shifted correction thresholding curve 645 remain at 0 decibel during the first 20 decibels. Accordingly, adding the values of the correction thresholding curve 644 and the shifted correction thresholding curve 645 to that of the ideal thresholding curve 643 results in a final thresholding curve 646 that follows the ideal thresholding curve 643. Similar to the ideal thresholding curve 643, the final thresholding curve 646 also starts to decline in a roughly linear manner at around 11 decibels. However, due to the influence of the correction thresholding curve 644 and the shifted correction thresholding curve 645, the final thresholding curve levels off and remains at around -16 decibels.

Embodiments of the present disclosure may be realized in any of various forms, e.g., in software. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

### List of reference signs

- 100: flow diagram
- 110: measured chamber data
- 120: azimuth and elevation configuration
- 130: unit-dependent threshold value
- 140: ideal thresholding values
- 150: correction thresholding values
- 160: final thresholding values
- 170: final step (extraction of adaptive threshold)
- 180: signal-to-noise ratio
- 190: adaptive threshold value
- 200, 300, 400,: graph
- 210, 330: y-axis
- 220, 340: x-axis
- 241, 441: dotted line
- 242, 442: semi-dotted line
- 242: solid line
- 250, 450, 550: SNR intercept point
- 310, 410: second graph
- 342, 442, 642: ideal thresholding curve
- 343, 443: chamber thresholding curve
- 344, 444, 644: correction thresholding curve
- 380: left extrapolation box
- 390: right extrapolation box
- 421: vertical line
- 500: shifting graph
- 600: final thresholding graph
- 645: shifted correction thresholding curve
- 646: final thresholding curve

## Claims

1. A computer-implemented method for determining an adaptive threshold for classifying a response signal to a signal emitted by a radar unit as a single scatterer response or a non-single scatterer response, the method comprising:
obtaining a plurality of unit-independent thresholds based on a plurality of response signals with different signal-to-noise ratios;
obtaining a plurality of unit-dependent thresholds based on a plurality of signals emitted by the radar unit with a plurality of configurations of azimuth and elevation angles (120);
determining, based on the plurality of unit-independent thresholds and the plurality of unit-dependent thresholds, the adaptive threshold (190).

2. The method of the preceding claim, wherein obtaining a plurality of unit-dependent thresholds comprises:
performing, using the radar unit, a plurality of single scatterer tests;
wherein each of the plurality of single scatterer tests is performed with one of the plurality of configurations of azimuth and elevation angles.

3. The method of the preceding claim, wherein the step of obtaining a plurality of unit-dependent thresholds comprises:
determining the plurality of unit-dependent thresholds based on the plurality of single scatterer tests.

4. The method of any one of the preceding claims, wherein the step of obtaining a plurality of unit-independent thresholds comprises:
obtaining a plurality of unit-independent chamber thresholds (343) based on a first statistical simulation using a measured radar response;
wherein the first statistical simulation is preferably a first Monte Carlo simulation.

5. The method of any one of the preceding claims, wherein the step of obtaining a plurality of unit-independent thresholds comprises:
obtaining a plurality of unit-independent ideal thresholds (342) based on a second statistical simulation using an ideal radar response;
wherein the second statistical simulation is preferably a first Monte Carlo simulation.

6. The method of claims 4 and 5, wherein the step of determining the adaptive threshold comprises:
calculating, based on the plurality of unit-independent chamber thresholds (343) and the plurality of unit-independent ideal thresholds (342), a plurality of unit-independent correction thresholds (344).

7. The method of the preceding claim, wherein the step of calculating comprises:
extrapolating one or more of the unit-independent correction thresholds of the plurality of unit-independent correction values (344).

8. The method of claim 6 or 7, wherein the step of calculating comprises:
interpolating one or more of the unit-independent correction thresholds of the plurality of unit-independent correction values (344).

9. The method of any one of claims 6 to 8, wherein the step of determining the adaptive threshold further comprises:
shifting the plurality of unit-independent correction thresholds (344) to obtain a plurality of unit-independent shifted correction thresholds (645) based on the plurality of unit-dependent thresholds.

10. The method of the preceding claim, wherein the step of determining the adaptive threshold further comprises:
adding the plurality of unit-independent correction thresholds (644), the plurality of unit-independent shifted correction thresholds (645) and the plurality of ideal thresholds (642) to obtain a plurality of final thresholds (646).

11. The method of the preceding claim, wherein the step of determining the adaptive threshold further comprises:
obtaining a signal-to-noise ratio;
extracting the adaptive threshold based on the plurality of final thresholds (646) and the signal-to-noise ratio.

12. A computer-implemented method for classifying a response signal to a signal emitted by a radar unit as a single scatterer response or a non-single scatterer response, the method comprising:
determining an adaptive threshold according to the method of any one of the preceding claims;
classifying, based on the adaptive threshold, the response signal to the signal emitted by the radar unit as a single scatterer response or a non-single scatterer response.

13. A control unit for determining an adaptive threshold for classifying a response signal to a signal emitted by a radar unit as a single scatterer response or a non-single scatterer response, the control unit comprising means for performing the method of any one of claims 1 to 11 or the method of claim 12.

14. An apparatus for determining an adaptive threshold for classifying a response signal to a signal emitted by a radar unit as a single scatterer response or a non-single scatterer response, the apparatus comprising the control unit of the preceding claim.

15. A computer program comprising instructions which, when executed by a computer, cause the computer to carry out the method of any one of claims 1 to 11 or the method of claim 12.
